Europäisches Patentamt

European Patent Office

Office européen des brevets

(19)

(11) Publication number : **0 648 603 A1**

(12)

# EUROPEAN PATENT APPLICATION

(21) Application number : 94307500.2

(22) Date of filing : 13.10.94

(51) Int. Cl.⁶ : **B32B 31/30**, B29C 47/76, G03C 1/79, C08K 3/00, C08J 3/20, C08L 67/02

(30) Priority : 15.10.93 JP 258371/93

(43) Date of publication of application :
19.04.95 Bulletin 95/16

(84) Designated Contracting States :
DE GB NL

(71) Applicant : FUJI PHOTO FILM CO., LTD.
210 Nakanuma
Minami-Ashigara-shi
Kanagawa (JP)

(72) Inventor : Sato, Takanori, c/o Fuji Photo Film
Co., Ltd.
200 Onakazato
Fujinomiya-shi, Shizuoka (JP)

Inventor : Nishikawa, Yasuo, c/o Fuji Photo
Film Co., Ltd.
200 Onakazato
Fujinomiya-shi, Shizuoka (JP)
Inventor : Yoshida, Tetsuya, c/o Fuji Photo Film
Co., Ltd.
200 Onakazato
Fujinomiya-shi, Shizuoka (JP)
Inventor : Miyoshi, Takahito, c/o Fuji Photo
Film Co., Ltd.
200 Onakazato
Fujinomiya-shi, Shizuoka (JP)
Inventor : Tada, Sugihiko, c/o Fuji Photo Film
Co., Ltd.
200 Onakazato
Fujinomiya-shi, Shizuoka (JP)

(74) Representative : Moore, Anthony John et al
Gee & Co.
Chancery House
Chancery Lane
London WC2A 1QU (GB)

(54) Process for producing support for photographic printing paper.

(57)   A process for producing a support for a photographic printing paper which comprises melt-extrusion laminating a polyester resin composition on one side or both sides of a base paper using a vent-extruder having a vent hole. The polyester resin has an intrinsic viscosity of from 0.4 to 1.3 (25°C) and a specific surface area of 10 cm²/g or higher. During the melt-extrusion laminating at least one vent-hole of the extruder is evacuated.

EP 0 648 603 A1

The present invention relates to a process for producing a support for a photographic printing paper by melt-extrusion laminating a polyester resin composition on a paper support. The process of the present invention provides a stable laminate, prevents a reduction in viscosity of a melted resin, allows for use of both a resin and a pigment without drying, and does away with the need to use master pellets containing a large amount of pigment.

Hitherto, in a support for a photographic printing paper, a polyolefin layer containing titanium dioxide pigment dispersed therein is coated on the surface side of a base paper having an emulsion layer, and a polyolefin layer which does not contain a pigment is laminated on the opposite surface side of the base paper to increase optical reflection and to impart water resistance. The effect of water contained in a polyolefin resin and a pigment during a melt-extruding lamination is described as follows. The polyolefin resin has a small water absorption and the water content of the pigment is also very small. Consequently, the water contained in the resin and the pigment does not promote decomposition of the resin. Accordingly, the melt-extrusion lamination step using a polyolefin resin is stable.

When a pigment-containing polyolefin resin is used for lamination, polyolefin resin master pellets containing a large amount of pigment are prepared in advance using a Banbury mixer or other mixer. When laminating, the master pellets are added to the polyolefin resin in an amount required for obtaining the desired pigment concentration in an extruder. This technique is called the master-batching method.

When a film base or other products are produced from a polyester resin, the polyester resin is sufficiently dried to adjust the water content to about several tens of ppm. In this manner, the reduction of viscosity of the polyester resin due to hydrolyzation can be prevented. As a result, the properties and the melting state of the polyester resin are well maintained during melt-extrusion.

The present inventors previously developed a photographic printing paper support comprising a base paper laminated with a polyester resin as disclosed, for example, in JP-A-5-127309 and JP-A-5-204091. (The term "JP-A" as used herein means an unexamined published Japanese patent application.)

However, a polyester resin is inferior to a polyolefin resin (e.g., a polyethylene resin). That is, in laminating the polyester resin, the fluctuation of the edge portions of the film (i.e., a neck-in and a surging phenomena) tends to occur due to the melt characteristics of the polyester resin. Accordingly, when high speed extruding-lamination is conducted, the film extruded from a T-die tends to wrap on a nip roll, and during reel up, the film is liable to be cut. Thus, the lamination properties of polyester resin are less suitable than those of polyolefin resin.

The reasons why the neck-in and surging phenomena readily occur in a polyester resin are discussed below which reference to a polyethylene terephthalate resin (hereinafter, referred to as a PET resin).

The neck-in and surging phenomena in a PET resin are caused by decomposition of the resin due to heat and/or hydrolysis. Such decomposition is remarkably accelerated by the presence of even a small amount of water contained in the PET resin and the pigment that are added to an extruder. Accordingly, in order to prevent a reduction in the viscosity of the resin, the resin and pigment must be dried prior to adding to the extruder.

In producing photographic printing paper supports by laminating a PET resin layer on a base paper, the present inventors have used PET resin master pellets containing pigments in high concentration and comprising titanium dioxide as a main component. However, in order to sufficiently remove water present on the surface of the titanium dioxide, it is necessary to conduct drying under vacuum at a temperature of 500°C or higher. Thus, the master pellets cannot be completely dried. Accordingly, when the PET resin composition is laminated by a master-batching method, the viscosity of the resin is considerably reduced. This results in a remarkable reduction in the stability of the edge portion of the laminate film. Accordingly, there is a need in the art for development of a method for laminating a PET resin composition containing pigments without using the master-batch method.

An object of the present invention is to provide a process for producing a support for a photographic printing paper laminated with a polyester resin composition or a polyester resin composition containing a pigment, which process prevents a reduction in viscosity of the polyester resin during an extrusion laminating step to thereby stabilize the laminating step.

The present inventors have conducted extensive studies to solve the above described problems of the prior art. Based thereon, the present inventors discovered that in order to prevent a reduction in viscosity of the polyester resin composition for lamination of a paper support, it is important to remove from the extruder the water that has evaporated from the resin and the pigment during melt-mixing. Following further investigation, the present inventors have also discovered that a reduction in viscosity of the polyester resin composition can be prevented by using a vent-extruder having a vent hole, and evacuating from at least one vent-hole of the extruder while limiting the intrinsic viscosity to a value of from 0.4 to 1.3 (25°C) and the specific surface area of the polyester resin (particles) to 10 cm$^2$/g or higher. The present inventors have also discovered that in the above method an undried polyester resin or undried pigment can be used as well as a dried polyester resin, and that the polyester resin and the pigment can be directly mixed in the extruder without employing a conventional master-batch system. That is, a stable laminating step can be carried out by preventing a reduction in viscosity of the resin composition.

When a polyester resin having a specific surface area of 10 cm$^2$/g or higher is used, the water present both on the surface and in the inside of the resin can quickly diffuse. On the other hand, when a polyester resin having a specific surface area of lower than 10 cm$^2$/g, the diffusion rate of water is low, which results in accelerating a reduction in viscosity of the polyester resin during melt-extruding. Accordingly, the specific surface area of the polyester resin for use in the present invention is 10 cm$^2$/g or higher, preferably 50 cm$^2$/g or higher, more preferably 130 cm$^2$/g or higher. By limiting the specific surface area of the polyester resin as described above, the dispersibility of the pigment into the resin in case of direct mixing using an extruder is increased. It is particularly effective to use the resin and the pigment in the form of a thin-film or a powder.

The polyester resin for use in the present invention has an intrinsic viscosity of from 0.4 to 1.3 (25°C), preferably from 0.4 to 0.8. When the intrinsic viscosity is lower than 0.4, a film having a stable form cannot be obtained. When the intrinsic viscosity is higher than 1.3, the torque of the extruder screw is remarkably increased and the revolution rate of the screw is limited. As a result, it becomes difficult to fix the extrusion amount. The most preferable examples of the polyester resin for use in the present invention are polyethylene terephthalate and polyethylene naphthalate. Furthermore, polybutylene terephthalate and copolymers comprising a polyethylene terephthalate, polyethylene naphthalate or polybutylene terephthalate each modified with a comonomer comprising an aromatic dicarboxylic acid such as isophthalic acid, bisphenol A and 5-sodium sulfoisophthalate, and a polyhydric alcohol such as neopentyl glycol and triethylene glycol and the mixtures of these copolymers can be used in the present invention.

Examples of the pigment for use in the present invention include titanium dioxide, barium sulfate, zinc oxide, talc, calcium carbonate, aluminium oxide, kaolin, and silicon dioxide and a mixture thereof in a powdered form or a solid solution thereof. The addition amount of the pigment is about 1 to 50%, preferably about 5 to 35%, by weight, based on the total amount of the polyester resin composition including the pigment. If needed, other additives and pigment-dispersants may be employed.

The vent-extruder for use in the present invention includes both mono-screw type and double-screw type extruders, however, the double-screw type is preferred. The double-screw type extruder is advantageous because the surface of the resin mixture in the extruder is renewed often during mixing and extruding the resin mixture, such that the water evaporated from the resin and the pigment is effectively removed. The rotary directions of the two screws of the extruder may be the same as, or different from, one another.

When pigment is added to the extruder, the pigment is preferably added from the head hopper together with the polyester resin. Alternatively, the pigment may be added from another hopper positioned at the middle of the extruder, or a portion of the pigment may be added from the head hopper and the remaining pigment may be added from the hopper positioned at the middle of the extruder. The position of a vent hole for evacuating (deaerating) the extruder is important relative to the position of the hopper at which the pigment is added. When the polyester resin or the polyester resin with the pigment is added from the head hopper and the extruder is evacuated from only one vent hole, the vent hole is positioned at a feeding part of the segment of the extruder in which the polyester resin begins to melt and completes melting. The distance from the head hopper to the vent hole is about 1/3 or less of the full-length of the extruder-cylinder. The feeding part of the segment is positioned before a kneading part of the segment by which powerful kneading is provided.

When the evacuating step comprises two or more steps, at least one of the evacuation steps is conducted at a segment composed of a screw-pattern having a high renewability of the surface of the resin.

When the pigment is added from a hopper positioned at the middle of the extruder, the vent hole for evacuating the extruder is positioned at a segment in which the polyester resin begins to melt and completes melting. An additional vent hole for evacuating the extruder is preferably positioned at a segment where the pigment is added just previously. It is further preferred to provide yet another vent hole for evacuating the extruder at a segment where the surface of the resin melt is effectively renewed.

As the feeding part of the segment and the segment composed of a screw-pattern having a high renewability of the surface of the resin, for example, a fullflight can be used. Also, as the kneading part of the screw segment, a rotary and a kneading disc can be used.

A melt-extruding method with evacuating from a vent hole using a vent-type extruder is disclosed, for example, in JP-A-2-230235.

The extruder is preferably evacuated by maintaining an inner pressure of the cylinder of the extruder to a degree of vacuum of 250 hPa or lower. As the specific surface area of the resin pellets employed is reduced, a higher degree of vacuum is needed. Accordingly, a degree of vacuum of 15 hPa or lower is more preferred, and a degree of vacuum of 4 hPa or lower is particularly preferred.

The present invention is described below in greater detail by reference to the following Examples, but the present invention is not to be construed as being limited thereto. In the Examples, all parts are by weight.

The following are methods for measurement and evaluation that were used in the Examples. Measurement of Intrinsic Viscosity Values (IV values):

IV values were measured in a solvent mixture of phenol and tetrachloroethane (3:2 by weight) at a temperature of 25°C using a Ubbelohde viscometer. In a polyester resin composition containing a pigment, the polyester resin and the pigment were first separated from each other by dissolving the resin composition in a solvent, and the pigment was removed from the resin composition by a centrifugal method. Then, the IV value of the separated resin was measured.

Measurement of Surface Areas:

50 polyester resin particles were randomly selected from a polyester resin raw material.

(1) When the resin particles had a so-called "regular shape" such as a rectangular parallelepiped, sphere or ellipsoid, the surface areas of these resin particles were calculated using actually measured values of these shapes such as diameters, edge lengths, etc., which were measured using an optical microscope or a scanning electron microscope.

(2) When the resin particles had irregular shapes, and in their three dimensional diameters, which were measured using an optical microscope or a scanning electron microscope, the ratio of the longest diameter/the shortest diameter was in the range of 1.0 to 1.2, the average value of these three diameters was taken as the diameter of a sphere. In this case, the resin particles were treated as spheres, and their surface areas were calculated using the average value as the diameter of a sphere.

When the resin particles had an irregular shape and the ratio of the longest diameter/the shortest diameter in their three dimensional diameters was larger than 1.2, the average value of these three diameters was taken as a side length of a cube. In this case, the resin particles were treated as a rectangular parallelepiped, and their surface areas were calculated using the average value as a side length of a rectangular parallelepiped.

Measurement of Water Content:

Water content of the resin was measured by Karl Fisher's coulometric titration method using equipment having a water vaporization device suitable for measuring trace water amounts (MKC-210 manufactured by Kyoto Denshi K.K.). Measurement of Stability of Laminate Film:

This measurement was conducted using a double-screw (same-direction rotary) type vent extruder (2D25W manufactured by Toyo Seiki K. K., L/D = 35) in which an inner temperature was set between 280 and 310°C and gradually heightened from a hopper toward a T-die. A film was extruded from the T-die having a width of 15 cm and a lip-die clearance of 0.6 mm with deaerating from a vent hole in an extruded amount of from 100 to 150 g/min. The fluctuation in the edge of the film extruded and falling from the T-die was observed and evaluated.

## Example 1

A dried PET resin (IV value: 0.65, specific surface area: 18.5 cm$^2$/g, water content: 30 ppm) was added to an extruder from its head hopper, and melt-extruded while evacuating from a vent hole positioned at a melting part of the extruder to maintain a degree of vacuum of 6.6 hPa.

The fluctuation stability of the PET resin film extruded and falling from the T-die was evaluated. Further, the IV value of the falling film was measured. The results are shown in the Table below.

As shown in the Table, the film extruded and falling from the T-die did not fluctuate in its form and state. Furthermore, there was hardly any reduction in viscosity of the resin before and after extrusion.

## Example 2

An undried PET resin (IV value: 0.55, specific surface area: 174.5 cm$^2$/g, water content: 1,300 ppm) was added to an extruder from a head hopper, and melt-extruded with evacuation from two vent holes to maintain a degree of vacuum to 4 hPa in the cylinder of the extruder. One of the two vent holes was positioned at a melting part of the cylinder, and the other was positioned at a part of the cylinder where the surface of the resin melt was considerably renewed.

The film thus extruded was evaluated in the same manner as in Example 1. The results obtained are shown in the Table below.

As shown in the Table, the film extruded and falling from the T-die did not fluctuate in its form, and the IV value was hardly changed.

Comparative Example 1

The procedure of Example 1 was repeated, except that the extruder was not evacuated.

In the thus extruded film, the edge of the film readily fluctuated in its form, and marked neck-in phenomena and reduction in viscosity of the resin were observed as compared with Example 1.

Comparative Example 2

The procedure of Example 1 was repeated, except that the specific surface area of the PET resin particles was changed to 5 cm²/g. A marked reduction in viscosity of the extruded resin and neck-in phenomena were observed as compared with Example 1.

Comparative Example 3

An undried PET resin (IV value: 0.37, specific surface area: 412 cm²/g, water content: 1,300 ppm) was added to an extruder from a head hopper and melt-extruded with evacuation from two vent holes, one of which was positioned at a melting part of the cylinder barrel and the other positioned at a part of the cylinder where the surface of the resin melt was extensively renewed. The inner pressure of the cylinder was maintained at a degree of vacuum of 4.0 hPa. The IV value of the resin thus extruded hardly changed, but the edge of the film extruded and falling from the T-die was not stable and changed its form.

Example 3

90 parts of a dried PET resin (IV value: 0.65, specific surface area: 18.5 cm²/g, water content: 30 ppm) and 10 parts of titanium dioxide powder which has been dried at a temperature of 200°C for 10 hours were mixed. The resulting mixture was added to an extruder from a head hopper and melt-extruded with evacuating from two vent holes, one of which was positioned at a melting part of the cylinder barrel and the other was positioned at a part of the cylinder where the surface of the resin melt was extensively renewed. The inner pressure of the cylinder was maintained at a degree of vacuum of 4.0 hPa. The edges of the film thus extruded and falling from the T-die were stable and did not change their form. Furthermore, the viscosity of the extruded resin was hardly reduced.

Example 4

70 parts of an undried PET resin (IV value: 0.62, specific surface area: 18.5 cm²/g, water content: 1,300 ppm) and 30 parts of undried talc particles were mixed. The resulting mixture was added to an extruder from a head hopper and melt-extruded with evacuating from three vent holes, one of which was positioned at a melting part of the cylinder barrel and the other two positioned at a part of the cylinder where the surface of the resin melt was extensively renewed. The inner pressure of the cylinder was maintained at a degree of vacuum of 1.3 to 2.6 hPa. The edges of the film extruded and falling from the T-die film were stable and did not change in form. Furthermore, the viscosity of the extruded resin was hardly reduced.

Example 5

80 parts of an undried polyethylene naphthalate resin (hereinafter referred to as a PEN resin) (IV value: 0.62, specific surface area: 175 cm²/g, water content: 1,500 ppm) was added to an extruder from a head hopper, and then 20 parts of undried titanium dioxide was added to the extruder from a side feed opening and melt-extruded under vacuum. The extruder was evacuated from three vent holes, one of which was positioned at a melting part of the cylinder barrel, the other one was positioned just behind the position where the titanium dioxide was added, and the remaining one was positioned at a part of the cylinder where the surface of the resin melt was extensively renewed. The inner pressure of the cylinder was maintained at a degree of vacuum of 1.3 to 4.0 hPa. Although the viscosity of the extruded resin was reduced to a small extent, the edges of the film thus extruded and falling from the T-die were stable and did not change in form.

Table

|  | Example 1 | Example 2 | Comparative Example 1 | Comparative Example 2 |
|---|---|---|---|---|
| Resin | Dried PET resin 100 parts | Undried PET resin 100 parts | Dried PET resin 100 parts | Dried PET resin 100 parts |
| (Adding position) | (Head) | (Head) | (Head) | (Head) |
| Pigment (adding position) | None | None | None | None |
| IV value of the resin before extrusion | 0.65 | 0.55 | 0.65 | 0.65 |
| Specific surface area ($cm^2/g$) | 18.5 | 174.5 | 18.5 | 5 |
| Number of vent holes for evacuation | 1 | 2 | 0 | 1 |
| Degree of vacuum (hPa) | 6.6 | 4.0 | — | 6.6 |
| IV value of the resin after extrusion | 0.61 | 0.52 | 0.45 | 0.47 |
| Stability of the film edge* | o | o | Δ | Δ |

EP 0 648 603 A1

Table (cont'd)

| | Comparative Example 3 | Example 3 | Example 4 | Example 5 |
|---|---|---|---|---|
| Resin | Undried PET resin 100 parts | Dried PET resin 90 parts | Undried PET resin 70 parts | Undried PET resin 80 parts |
| (Adding position) | (Head) | (Head) | (Head) | (Head) |
| Pigment (adding position) | None | Dried $TiO_2$ (Head) | Dried talc (Head) | Undried $TiO_2$ (Side) |
| IV value of the resin before extrusion | 0.37 | 0.65 | 0.62 | 0.62 |
| Specific surface area $(cm^2/g)$ | 412 | 18.5 | 18.5 | 175 |
| Number of vent hole for evacuation | 2 | 2 | 2 | 2 |
| Degree of vacuum (hPa) | 4.0 | 4.0 | 1.3-2.6 | 1.3-4.0 |
| IV value of the resin after extrusion | 0.39 | 0.61 | 0.58 | 0.54 |
| Stability of the film edge* | × | o | Δ | Δ |

\* o means that fluctuation in the form and state of the film edge was not observed.

Δ means that the form and state of the film edge fluctuated to a small extent.

× means that the form and state of the film edge fluctuated to a large extent.

The specific surface areas of the resin particles shown in the Table were calculated as follows. In Examples 1, 4, 5 and Comparative Example 1, they were calculated by treating the resin particles as regular shaped ellipsoids. In Example 2 and Comparative Example 2, they were calculated by treating the resin particles as regular shaped rectangular parallelepipeds. In Comparative Example 3 and Example 6, the resin particles were irregular shaped fine particles, and the ratio of the longest diameter/the shortest diameter of the former resin particles was 1.2 and that of the latter resin panicles was 1.5. Accordingly, the specific surface area of Comparative Example 3 was calculated by treating the resin particles as spheres, and that of Example 6 was calculated by treading the resin particles as cubes.

As is shown in the Table above, the process of the present invention provides a stable laminate, prevents a reduction in viscosity of the melted resin, allows for use of both a resin and a pigment without drying, and does away with the need to use master pellets containing a large amount of pigment.

## Claims

1. A process for producing a support for a photographic printing paper which comprises melt-extrusion laminating a polyester resin composition on one side or both sides of a base paper using a vent-extruder having a vent hole, wherein said polyester resin has an intrinsic viscosity of from 0.4 to 1.3 (25°C) and a specific surface area of 10 cm²/g or higher, and at least one vent-hole of the extruder is evacuated during the melt-extrusion lamination.

2. A process as claimed in claim 1, wherein said polyester resin composition contains a pigment in an amount of from 1 to 50 wt%, and the polyester resin and the pigment are directly melt-mixed in the extruder.

3. A process as claimed in claim 1 or 2, wherein said polyester resin is polyethylene terephthalate or polyethylene naphthalate.

4. A process as claimed in claim 1, 2 or 3, wherein said polyester resin has a specific surface area of 130 cm²/g or more.

5. A process as claimed in any preceding claim, wherein said polyester resin has an intrinsic viscosity of from 0.4 to 0.8 (25°C).

6. A process as claimed in any preceding claim, wherein said extruder comprises a cylinder, and the evacuation is conducted to maintain the pressure inside the cylinder at a degree of vacuum of 250 hPa or less.

European Patent
Office

**EUROPEAN SEARCH REPORT**

Application Number

EP 94 30 7500

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | DATABASE WPI<br>Week 9131,<br>Derwent Publications Ltd., London, GB;<br>AN 91-226493<br>* abstract *<br>& JP-A-3 145 641 (KONICA CORP, KANEBO KK)<br>20 June 1991<br>* column 12 *<br>--- | 1-3,5,6 | B32B31/30<br>B29C47/76<br>G03C1/79<br>C08K3/00<br>C08J3/20<br>C08L67/02 |
| D,Y | DATABASE WPI<br>Week 9337,<br>Derwent Publications Ltd., London, GB;<br>AN 93-290688<br>& JP-A-5 204 091 (FUJI PHOTO FILM CO LTD)<br>13 August 1993<br>* abstract *<br>--- | 1-3,5,6 | |
| D,Y | DATABASE WPI<br>Week 9325,<br>Derwent Publications Ltd., London, GB;<br>AN 93-201292<br>& JP-A-5 127 309 (FUJI PHOTO FILM CO LTD)<br>25 May 1993<br>* abstract *<br>--- | 1-3,5,6 | TECHNICAL FIELDS SEARCHED (Int.Cl.6)<br><br>B32B<br>B29C<br>G03C<br>C08K<br>C08J |
| A | JP-A-64 046 749 (OJI PAPER CO LTD) 21 February 1989<br>* figures 1-3 *<br>& PATENT ABSTRACTS OF JAPAN<br>vol. 13, no. 245 (P-881) 8 June 1989<br>& JP-A-01 046 749 (OJI PAPER CO LTD) 21 February 1989<br>* abstract *<br>--- | 1 | |
| A | EP-A-0 388 194 (KONICA CORPORATION)<br>* page 4, line 36 - line 55; claims 1,19,20 *<br>--- | 1-3,5 | |

-/--

The present search report has been drawn up for all claims

| Place of search | Date of completion of the search | Examiner |
|---|---|---|
| THE HAGUE | 26 January 1995 | Van Nieuwenhuize, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 94 30 7500

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 327 768 (KONICA CORPORATION)<br>* page 5, line 43 - line 44 *<br>--- | 1,5 | |
| A | EP-A-0 288 315 (KONICA CORPORATION, KANEBO LTD)<br>* column 3, line 31 - column 10, line 19 *<br>* column 12, line 60 - line 64; figures 1-7 *<br>--- | 6 | |
| D,A | EP-A-0 373 300 (FELIX SCHOELLER, JR. GMBH & CO KG)<br>* page 3, line 12 - line 20 *<br>----- | 1 | |

TECHNICAL FIELDS
SEARCHED       (Int.Cl.6)

The present search report has been drawn up for all claims

| Place of search | Date of completion of the search | Examiner |
|---|---|---|
| THE HAGUE | 26 January 1995 | Van Nieuwenhuize, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)